# EUROPÄISCHE PATENTSCHRIFT

(11) **EP 2 917 061 B1**
(45) Veröffentlichungstag und Bekanntmachung des Hinweises auf die Patenterteilung: **10.01.2018**
(21) Anmeldenummer: 13766037.9
(22) Anmeldetag: 20.09.2013
(51) Int. Cl.: B60K 26/02, G05G 1/38, G05G 5/03, G01D 5/14

(54) **AKTIVES FAHRPEDAL FÜR EIN FAHRZEUG UND FAHRZEUG, DAS DAMIT AUSGESTATTET IST**
ACTIVE ACCELERATOR PEDAL FOR A VEHICLE AND VEHICLE WITH SUCH A PEDAL
PÉDALE D'ACCÉLÉRATEUR ACTIVE POUR UN VÉHICULE ET VÉHICULE AVEC UNE TELLE PÉDALE

(30) Priorität: 08.11.2012 DE 102012220383
(43) Veröffentlichungstag der Anmeldung: 16.09.2015
(73) Patentinhaber: Robert Bosch GmbH, 70442 Stuttgart (DE)
(72) Erfinder: GROSSMANN, Alex, 71229 Leonberg (DE); SIEBER, Udo, 74321 Bietigheim (DE); KLOTZBUECHER, Thomas, 73635 Rudersberg (DE); HENNING, Daniel, 74372 Sersheim (DE)
(86) Internationale Anmeldenummer: PCT/EP2013/069593
(87) Internationale Veröffentlichungsnummer: WO 2014/072111

(56) Entgegenhaltungen:
- EP-A1- 0 085 518
- EP-A2- 1 868 058
- EP-A2- 1 975 760
- EP-A2- 2 172 358
- EP-A2- 2 301 788
- EP-A2- 2 492 130
- JP-A- 2002 036 904
- US-A1- 2004 237 700

## Beschreibung

### Gebiet der Erfindung

Die Erfindung betrifft ein aktives Fahrpedal für ein Fahrzeug und ein Fahrzeug.

### Hintergrund der Erfindung

Ein aktives Gas- bzw. Fahrpedal kann dem Fahrer über haptische Signale verschiedene Rückmeldungen geben. Dazu ist das aktive Fahrpedal mit einem geeigneten Aktuator ausgestattet. Die Ansteuerung des Aktuators erfolgt durch eine lokale Pedalsteuerung, eine Elektronik, die ebenfalls in das Fahrpedal integriert sein kann und beispielsweise über Signale via einem CAN-Bus getriggert werden kann.

Aus der EP 2 172 358 A2 ist ein aktives Fahrpedal bekannt, welches über haptische Signale Rückmeldungen an den Fahrer geben kann.

Aus Sicherheitsgründen kann der Aktuator mechanisch so an das Fahrpedal gekoppelt werden, dass nur Kräfte in Pedalrückstellrichtung vom Aktuator auf das Fahrpedal übertragen werden können. Mechanische Lösungen, bei denen das Pedal sich entkoppelt vom Aktuator bewegen kann, erfordern für die Lageregelung des Aktuators neben der Aktuatorposition auch die Pedalposition.

Der Pedalwinkel, d. h. eine aktuelle Stellung eines Fahrpedalhebels, kann mit zwei redundanten Sensorelementen erfasst und der ECU, d. h. einer zentralen Motorsteuerung, übermittelt werden. An die beiden redundanten Signale der beiden Sensorelemente werden dabei zu Auswerte- und Diagnosezwecken in der Regel sehr hohe Genauigkeitsanforderungen, beispielsweise bezüglich Messwert, Gleichlauf und Beziehung der beiden Signale zueinander gestellt.

Daher kann es nachteilig sein, eine der zur zentralen Motorsteuerung gehenden Signalleitungen, die jeweils mit einem Sensorelement verbunden sind, auch mit der Pedalsteuerung zu verbinden, da die Pedalsteuerung in der Regel mit einer anderen Spannungsversorgung und mit einer anderen Masseanbindung arbeitet und es so zu Signalversätzen, beispielsweise aufgrund eines Masseversatzes kommen kann und somit Gleichlaufanforderungen nicht mehr erfüllt werden können.

### Zusammenfassung der Erfindung

Es ist Aufgabe der Erfindung, ein sicheres, einfach aufgebautes und kostengünstiges aktives Fahrpedal bereitzustellen.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein aktives Fahrpedal für ein Fahrzeug, beispielsweise einen Pkw, Lkw oder Bus.

Gemäß einer Ausführungsform der Erfindung umfasst das aktive Fahrpedal einen Pedalhebel, einen Aktuator, der dazu ausgeführt ist, eine haptische Rückmeldung an den Pedalhebel abzugeben, eine Pedalsteuerung, die dazu ausgeführt ist, den Aktuator zu steuern, und einen ersten Pedalstellungssensor und einen zweiten Pedalstellungssensor, die dazu ausgeführt sind, eine Stellung des Pedalhebels zu erfassen. Der erste Pedalstellungssensor ist dazu ausgeführt, erste Pedalstellungssignale an eine zentrale Motorsteuerung des Fahrzeugs zu übertragen, mit denen die Motorsteuerung den Antrieb des Fahrzeugs steuert. Der zweite Pedalstellungssensor ist dazu ausgeführt, zweite Pedalstellungssignale an die Pedalsteuerung zu übertragen, wobei die zweiten Pedalstellungssignale Informationen über die gleiche Pedalstellung wie die ersten Pedalstellungssignale enthalten können. Das aktive Fahrpedal umfasst einen am Pedalhebel befestigten Magneten, über dessen Drehung um eine Drehachse der erste Pedalstellungssensor und der zweite Pedalstellungssensor die Stellung des Pedalhebels erfassen.

Damit können über denselben Magneten die Pedalposition redundant für die zentrale Motorsteuerung (einem Motorsteuergerät, das sich entfernt von dem aktiven Fahrpedal befinden kann) und über einen weiteren Sensorchip die Pedalstellung für die Pedalsteuerung (eine Pedalsteuerelektronik, die sich im aktiven Fahrpedal befinden kann) erfasst werden. Auf diese Weise kann eine Rückwirkung auf das Erzeugen der ersten Pedalstellungssignale durch den zweiten Pedalstellungssensor vermieden werden. Die Information über die Pedalstellung kann auf diese Weise sowohl in der zentralen Motorsteuerung als auch in der lokalen Ansteuerelektronik im aktiven Fahrpedal vorliegen.

Die Erfassung der Pedalposition für die Lageregelung des Aktuators erfordert keine zwei Magnete bzw. keinen stärkeren Magneten und keine zweilagige Bestückung der Platine.

Die Pedalstellungssensoren können dazu ausgeführt sein, eine Winkelstellung bzw. Winkelposition des Pedalhebels zu erfassen. Der Magnet, beispielsweise ein Permanentmagnet, kann an der Hebelachse des Pedalhebels angebracht sein und kann sich um die Hebelachse des Pedalhebels drehen. Die Hebelachse des Pedalhebels kann somit die Drehachse des Magneten sein. Die Pedalstellungssensoren können dazu ausgeführt sein, eine Richtung des Magnetfelds zu bestimmen. Die Pedalstellungssensoren können beispielsweise Hall-Sensorelemente umfassen. Aus der Richtung des Magnetfelds kann dann die Stellung des Pedalhebels abgeleitet werden.

Die Pedalsteuerung kann eine lokale Pedalsteuerung sein. D. h., sie kann sich im selben Gehäuse, auf derselben Platine und/oder in derselben Baugruppe wie die Pedalstellungssensoren und/oder die anderen Komponenten des aktiven Fahrpedals befinden.

Gemäß einer Ausführungsform der Erfindung ist der erste Pedalstellungssensor zentriert zu der Drehachse des Magneten angeordnet. Der erste Pedalstellungssensor bzw. dessen Messfläche kann zentrisch zum Magneten positioniert werden und somit verhältnismäßig genau die Pedalstellung erfassen.

Gemäß einer Ausführungsform der Erfindung ist der zweite Pedalstellungssensor versetzt zu der Drehachse des Magneten angeordnet. Die Messfläche des zweiten Pedalstellungssensors kann ca. 10 mm außerhalb des Zentrums des Magneten angeordnet sein, was einen Winkelfehler von ca. 1° bei einem Magneten mit einem Durchmesser von 16 mm ergibt. Bei einem Magneten mit größerem Durchmesser reduziert sich der Winkelfehler entsprechend.

Gemäß einer Ausführungsform der Erfindung sind der erste Pedalstellungssensor und der zweite Pedalstellungssensor in einer Ebene parallel zu einer Ebene des Magneten angeordnet. Zwischen den Pedalstellungssensoren und dem Magneten kann sich ein Luftspalt von in etwa 1,5 mm befinden. Auf diese Weise ist es nicht notwendig, eine Platine, auf der sich die beiden Pedalstellungssensoren befinden, auf zwei verschiedenen Lagen zu bestücken.

Gemäß einer Ausführungsform der Erfindung wird der erste Pedalstellungssensor von der zentralen Motorsteuerung mit Spannung versorgt. Das oder die Sensorelemente des ersten Pedalstellungssensors werden aus der zentralen Motorsteuerung mit Spannung versorgt und melden die Pedalstellung an die zentrale Motorsteuerung zurück.

Gemäß einer Ausführungsform der Erfindung wird der zweite Pedalstellungssensor über die Pedalsteuerung mit Spannung versorgt. Der separate, zweite Pedalstellungssensor kann von einer eigenen Spannungsversorgung über die lokale Pedalsteuerung versorgt werden. Eine gegenseitige Beeinflussung der lokalen Pedalsteuerung und der zentralen Motorsteuerung kann weitgehend ausgeschlossen werden.

Gemäß einer Ausführungsform der Erfindung umfasst der erste Pedalstellungssensor zwei Sensorelemente, die dazu ausgeführt sind, redundante Pedalstellungssignale zu erzeugen. Diese beiden Sensorelemente können auf einem gemeinsamen Chip angeordnet sein.

Gemäß einer Ausführungsform der Erfindung sind der erste Pedalstellungssensor auf einem ersten Chip und der zweite Pedalstellungssensor auf einem zweiten Chip angeordnet. Auf dem ersten Chip, der zentriert zur Drehachse angeordnet sein kann, können sich die beiden redundanten Sensorelemente des ersten Pedalstellungssensors befinden. Der zweite Chip kann versetzt zur Drehachse neben dem zweiten Chip platziert sein.

Gemäß einer Ausführungsform der Erfindung sind der erste Chip und der zweite Chip in einem gemeinsamen Gehäuse angeordnet. Eine Messfläche des ersten Chips kann zentriert zur Drehachse angeordnet ist sein.

Gemäß einer Ausführungsform der Erfindung sind der erste Pedalstellungssensor und der zweite Pedalstellungssensor auf einer gemeinsamen Platine angeordnet. Die beiden Chips können sich auf einer gemeinsamen Platine befinden, die gegenüberliegend dem Magneten angeordnet ist. Trotzdem ist es möglich, dass die beiden Chips auf der gemeinsamen Platine galvanisch voneinander getrennt sind, so dass keine ungewünschten Wechselwirkungen zwischen den beiden Pedalstellungssensoren entstehen können.

Gemäß einer Ausführungsform der Erfindung ist der erste Pedalstellungssensor und/oder der zweite Pedalstellungssensor dazu ausgeführt, ein Spannungssignal abzugeben, von dem die Stellung des Pedalhebels linear abhängt. Beispielsweise kann die Spannung eine Hall-Spannung sein. Insbesondere kann die Pedalstellung von den beiden redundanten Sensorelementen des ersten Pedalstellungssensors linear erfasst und als Spannungswert an die zentrale Motorsteuerung ausgegeben werden.

Ein weiterer Aspekt der Erfindung betrifft ein Fahrzeug mit einem aktiven Fahrpedal, so wie es obenstehend und untenstehend beschrieben ist.

### Kurze Beschreibung der Figuren

Im Folgenden werden Ausführungsbeispiele der Erfindung mit Bezug auf die beiliegenden Figuren detailliert beschrieben.
Fig. 1 zeigt schematisch ein Fahrzeug mit einem aktiven Fahrpedal gemäß einer Ausführungsform der Erfindung.
Fig. 2 zeigt schematisch ein Steuerungssystem für ein aktives Fahrpedal gemäß einer Ausführungsform der Erfindung.
Fig. 3 zeigt schematisch eine Seitenansicht eines Sensorsystems für ein aktives Fahrpedal gemäß einer weiteren Ausführungsform der Erfindung.
Fig. 4 zeigt schematisch eine Draufsicht auf das Sensorsystem aus Fig. 3.

Grundsätzlich sind identische oder ähnliche Teile mit den gleichen Bezugszeichen versehen.

### Detaillierte Beschreibung von Ausführungsbeispielen

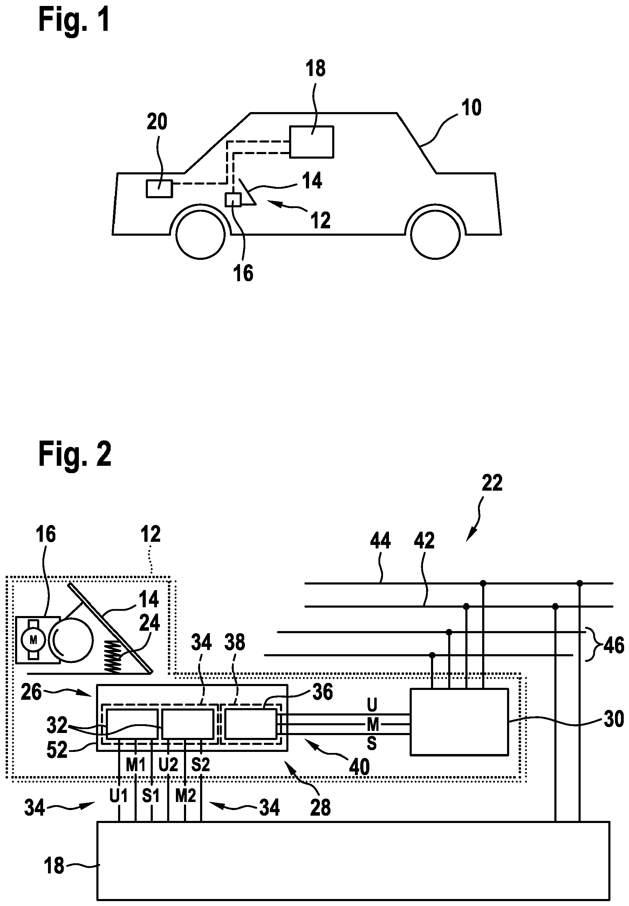

Die Fig. 1 zeigt ein Fahrzeug 10 mit einem aktiven Fahrpedal 12, das einen Pedalhebel 14, der vom Fahrer mit dem Fuß bedient werden kann, und einen Aktuator 16, beispielsweise mit einem Motor, umfasst. Eine zentrale Motorsteuerung 18 erhält Sensorsignale über die Pedalstellung des Pedalhebels 14 von dem aktiven Fahrpedal 12 und steuert einen Antrieb 20, beispielsweise einen Verbrennungsmotor oder einen Elektromotor, des Fahrzeugs 10 entsprechend.

Die Fig. 2 zeigt ein Steuerungssystem 22 für das aktive Fahrpedal 12 detaillierter. Das aktive Fahrpedal 12 umfasst dabei mechanische Komponenten, wie den Pedalhebel 14, eine Rückstellfeder 24 für den Pedalhebel 14 und den Aktuator 16, die zusammen mit elektronischen Komponenten, wie einem ersten Pedalstellungssensor 26, einem zweiten Pedalstellungssensor 28 und einer Pedalsteuerung 30 in einer gemeinsamen Baugruppe bzw. einem Pedalmodul verbaut sind.

Der Pedalstellungssensor 26 weist zwei redundante Sensorelemente 32 auf einem gemeinsamen Chip 34 auf, die beispielsweise Hall-Sensorelemente 32 sind.

Die beiden Sensorelemente 32 sind jeweils über analoge Verbindungen 34 mit der zentralen Motorsteuerung 18 verbunden. Dabei weist jede der Verbindungen 34 eine Leitung U1, U2 zur Spannungsversorgung, eine Leitung M1, M2 für die Masse und eine Leitung S1, S2 für die Pedalstellungssignale auf. Die beiden Sensorelemente werden aus der zentralen Motorsteuerung 18 über die Leitungen U1, U2 mit Spannung versorgt und melden die Pedalstellung über die Leitungen S1, S2 an die zentrale Motorsteuerung 18 zurück.

Der zweite Pedalstellungssensor 28 weist ein Sensorelement 36 auf einem weiteren Chip 38 auf, das auch ein Hall-Sensorelement 36 sein kann.

Das Sensorelement 36 ist über eine analoge Verbindung 40 mit der lokalen Pedalsteuerung 30 verbunden. Analog den Verbindungen 34 weist die Verbindung 40 eine Leitung U zur Spannungsversorgung, eine Leitung M für die Masse und eine Leitung S für die Pedalstellungssignale auf.

Genauso wie die zentrale Motorsteuerung 18 ist die Pedalsteuerung 30 mit einer Masseleitung 42 und einer Batteriespannungsleitung 44 verbunden. Weiter kann die Pedalsteuerung 30 mit einem CAN-Bus 46 verbunden sein.

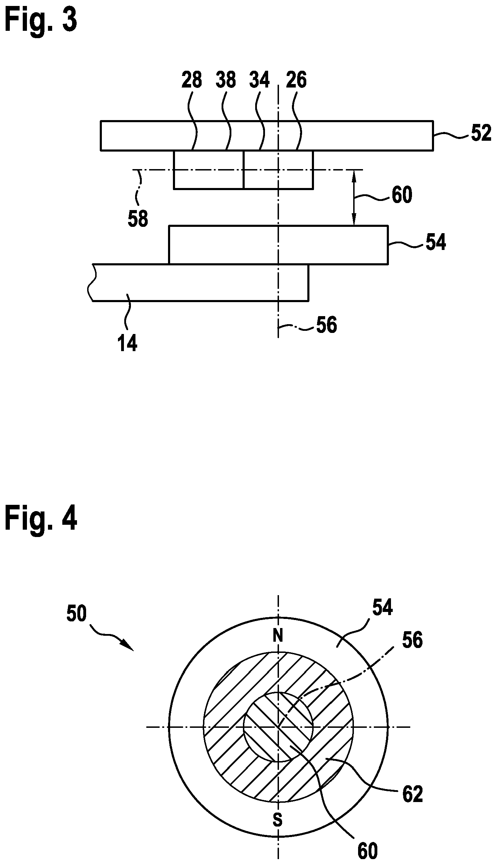

Die Fig. 3 zeigt schematisch eine Seitenansicht eines Sensorsystems 50 für das aktive Fahrpedal 12. Die beiden Pedalstellungssensoren 26, 28 bzw. die beiden Chips 34, 38 sind auf einer gemeinsamen Platine 52 angeordnet, die einem Magneten 54 am Pedalhebel 14 gegenüberliegt. Der Magnet 54 ist auf der Hebelachse 56 bzw. Drehachse des Pedalhebels 14 angeordnet. Die Stellung des Magneten 54 und damit die Pedalposition des Pedalhebels 14 kann über die beiden redundanten Sensorelemente 32 auf dem Chip 34 und das Sensorelement 36 auf dem Chip 38 linear erfasst werden.

Der Pedalstellungssensor 26 ist dabei zentriert zur Drehachse 56 und zum Magneten 54 angeordnet. Der Pedalstellungssensor 28 befindet sich in der gleichen Ebene wie der Pedalstellungssensor 26, ist aber versetzt zur Drehachse 56 neben dem Pedalstellungssensor 26 angeordnet. Der Pedalstellungssensor 28 befindet sich dabei möglichst nahe an der Drehachse 56.

Zwischen der Sensorebene 58 der beiden Pedalstellungssensoren 26, 28 und dem Magneten 54 kann dabei ein Abstand bzw. Luftspalt 60 von 1,5 ± 0,5 mm liegen.

Die Fig. 4 zeigt eine Draufsicht auf das Sensorsystem 50. Der kreisförmige Magnet 54 kann beispielsweise einen Durchmesser von 16 mm senkrecht zur Drehachse 56 aufweisen. Der erste Pedalstellungssensor 26 ist in einem ersten Sensorbereich 60 angeordnet, der die Drehachse 56 umgibt und beispielsweise einen Durchmesser von etwa 3 mm aufweist. Der zweite Pedalstellungssensor 28 ist in einem zweiten Sensorbereich 62 angeordnet, der den ersten Sensorbereich 60 umgibt und beispielsweise einen Durchmesser von etwa 10 mm aufweist.

## Patentansprüche

1. Aktives Fahrpedal (12) für ein Fahrzeug (10), das aktive Fahrpedal (12) umfassend:
einen Pedalhebel (14),
einen Aktuator (16), der dazu ausgeführt ist, eine haptische Rückmeldung an den Pedalhebel (14) abzugeben,
eine Pedalsteuerung (30), die dazu ausgeführt ist, den Aktuator (16) zu steuern,
einen ersten Pedalstellungssensor (26) und einen zweiten Pedalstellungssensor (28), die dazu ausgeführt sind, eine Stellung des Pedalhebels (14) zu erfassen,
wobei der erste Pedalstellungssensor (26) dazu ausgeführt ist, erste Pedalstellungssignale an eine zentrale Motorsteuerung (18) des Fahrzeugs (10) zu übertragen, mit denen die Motorsteuerung (18) einen Antrieb des Fahrzeugs (10) steuert,
wobei der zweite Pedalstellungssensor (28) dazu ausgeführt ist, zweite Pedalstellungssignale an die Pedalsteuerung (30) zu übertragen,
**dadurch gekennzeichnet, dass**
das aktive Fahrpedal (12) einen einzigen am Pedalhebel (14) befestigten Magneten (54) umfasst, über dessen Drehung um eine Drehachse (56) der erste Pedalstellungssensor (26) und der zweite Pedalstellungssensor (28) die Stellung des Pedalhebels (14) erfassen.

2. Aktives Fahrpedal (12) nach Anspruch 1,
wobei der erste Pedalstellungssensor (26) zentriert zu der Drehachse (56) des Magneten (54) angeordnet ist.

3. Aktives Fahrpedal (12) nach Anspruch 1 oder 2,
wobei der zweite Pedalstellungssensor (28) versetzt zu der Drehachse (56) des Magneten (54) angeordnet ist.

4. Aktives Fahrpedal (12) nach einem der vorhergehenden Ansprüche,
wobei der erste Pedalstellungssensor (26) und der zweite Pedalstellungssensor (28) in einer Ebene (58) parallel zu einer Ebene des Magneten (54) angeordnet sind.

5. Aktives Fahrpedal (12) nach einem der vorhergehenden Ansprüche,
wobei der erste Pedalstellungssensor (26) von der zentralen Motorsteuerung (18) mit Spannung versorgt wird; und/oder
wobei der zweite Pedalstellungssensor (28) über die Pedalsteuerung (30) mit Spannung versorgt wird.

6. Aktives Fahrpedal (12) nach einem der vorhergehenden Ansprüche,
wobei der erste Pedalstellungssensor (26) zwei Sensorelemente (32) umfasst, die dazu ausgeführt sind, redundante Pedalstellungssignale zu erzeugen.

7. Aktives Fahrpedal (12) nach einem der vorhergehenden Ansprüche,
wobei der erste Pedalstellungssensor (26) auf einem ersten Chip (34) und der zweite Pedalstellungssensor (28) auf einem zweiten Chip (38) angeordnet sind.

8. Aktives Fahrpedal (12) nach Anspruch 7,
wobei der erste Chip (34) und der zweite Chip (38) in einem gemeinsamen Gehäuse angeordnet sind;
wobei eine Messfläche des ersten Chips (38) zentriert zur Drehachse (56) angeordnet ist.

9. Aktives Fahrpedal (12) nach einem der vorhergehenden Ansprüche,
wobei der erste Pedalstellungssensor (26) und der zweite Pedalstellungssensor (28) auf einer gemeinsamen Platine (52) angeordnet sind.

10. Aktives Fahrpedal (12) nach einem der vorhergehenden Ansprüche,
wobei der erste Pedalstellungssensor (26) und/oder der zweite Pedalstellungssensor (28) dazu ausgeführt sind, ein Spannungssignal abzugeben, das linear von der Stellung des Pedalhebels (14) abhängt.

11. Fahrzeug (10) mit einem aktiven Fahrpedal (12) nach einem der Ansprüche 1 bis 10.

## Claims

1. Active accelerator pedal (12) for a vehicle (10), the active accelerator pedal (12) comprising:
an pedal lever (14),
an actuator (16) which is designed to output a haptic feedback to the pedal lever (14),
a pedal controller (30) which is designed to control the actuator (16),
a first pedal position sensor (26) and a second pedal position sensor (28) which are designed to detect a position of the pedal lever (14),
wherein the first pedal position sensor (26) is designed to transmit first pedal position signals to a central engine controller (18) of the vehicle (10), with which signals the engine controller (18) controls a drive of the vehicle (10),
wherein the second pedal position sensor (28) is designed to transmit second pedal position signals to the pedal controller (30),
**characterized in that**
the active accelerator pedal (12) comprises a single magnet (54) which is fastened to the pedal lever (14) and by means of whose rotation about a rotational axis (56) the first pedal position sensor (26) and the second position sensor (28) detect the position of the pedal lever (14).

2. Active accelerator pedal (12) according to Claim 1, wherein the first pedal position sensor (26) is arranged centred with respect to the rotational axis (56) of the magnet (54).

3. Active accelerator pedal (12) according to Claim 1 or 2,
wherein the second pedal position sensor (28) is arranged offset with respect to the rotational axis (56) of the magnet (54).

4. Active accelerator pedal (12) according to one of the preceding claims,
wherein the first pedal position sensor (26) and the second pedal position sensor (28) are arranged in a plane (58) parallel to a plane of the magnet (54).

5. Active accelerator pedal (12) according to one of the preceding claims,
wherein the first pedal position sensor (26) is supplied with voltage by the central engine controller (18); and/or wherein the second pedal position sensor (28) is supplied with voltage via the pedal controller (30).

6. Active accelerator pedal (12) according to one of the preceding claims,
wherein the first pedal position sensor (26) comprises two sensor elements (32) which are designed to generate redundant pedal position signals.

7. Active accelerator pedal (12) according to one of the preceding claims,
wherein the first pedal position sensor (26) is arranged on a first chip (34), and the second pedal position sensor (28) is arranged on a second chip (38) .

8. Active accelerator pedal (12) according to Claim 7, wherein the first chip (34) and the second chip (38) are arranged in a common housing;
wherein a measuring surface of the first chip (38) is arranged centred with respect to the rotational axis (56).

9. Active accelerator pedal (12) according to one of the preceding claims,
wherein the first pedal position sensor (26) and the second pedal position sensor (28) are arranged on a common circuit board (52).

10. Active accelerator pedal (12) according to one of the preceding claims,
wherein the first pedal position sensor (26) and/or the second pedal position sensor (28) are designed to output a voltage signal which depends linearly on the position of the accelerator pedal (14).

11. Vehicle (10) having an active accelerator pedal (12) according to one of Claims 1 to 10.

## Revendications

1. Pédale d'accélérateur active (12) pour un véhicule (10), la pédale d'accélérateur active (12) comprenant :
un levier de pédale (14),
un actionneur (16) qui est configuré pour délivrer un retour haptique au levier de pédale (14),
une commande de pédale (30) qui est configurée pour commander l'actionneur (16),
un premier capteur de position de pédale (26) et un deuxième capteur de position de pédale (28) qui sont configurés pour détecter une position du levier de pédale (14),
le premier capteur de position de pédale (26) étant configuré pour transmettre des premiers signaux de position de pédale à une commande de moteur (18) centrale du véhicule (10), avec lesquels la commande de moteur (18) commande un groupe propulseur du véhicule (10),
le deuxième capteur de position de pédale (28) étant configuré pour transmettre des deuxièmes signaux de position de pédale à la commande de pédale (30),
**caractérisée en ce que**
la pédale d'accélérateur active (12) comprend un unique aimant (54) fixé au levier de pédale (14), par le biais de la rotation autour d'un axe de rotation (56) duquel le premier capteur de position de pédale (26) et le deuxième capteur de position de pédale (28) détectent la position du levier de pédale (14).

2. Pédale d'accélérateur active (12) selon la revendication 1, le premier capteur de position de pédale (26) étant disposé de manière centrée par rapport à l'axe de rotation (56) de l'aimant (54).

3. Pédale d'accélérateur active (12) selon la revendication 1 ou 2, le deuxième capteur de position de pédale (28) étant disposé décalé par rapport à l'axe de rotation (56) de l'aimant (54).

4. Pédale d'accélérateur active (12) selon l'une des revendications précédentes, le premier capteur de position de pédale (26) et le deuxième capteur de position de pédale (28) étant disposés dans un plan (58) parallèle à un plan de l'aimant (54).

5. Pédale d'accélérateur active (12) selon l'une des revendications précédentes, le premier capteur de position de pédale (26) étant alimenté en tension par la commande de moteur (18) centrale ; et/ou le deuxième capteur de position de pédale (28) étant alimenté en tension par le biais de la commande de pédale (30).

6. Pédale d'accélérateur active (12) selon l'une des revendications précédentes, le premier capteur de position de pédale (26) comprenant deux éléments capteurs (32) qui sont configurés pour générer des signaux de position de pédale redondants.

7. Pédale d'accélérateur active (12) selon l'une des revendications précédentes, le premier capteur de position de pédale (26) étant disposé sur une première puce (34) le deuxième capteur de position de pédale (28) étant disposé sur une deuxième puce (38).

8. Pédale d'accélérateur active (12) selon la revendication 7, la première puce (34) et la deuxième puce (38) étant disposées dans un boîtier commun ; une surface de mesure de la première puce (38) étant disposée de manière centrée par rapport à l'axe de rotation (56).

9. Pédale d'accélérateur active (12) selon l'une des revendications précédentes, le premier capteur de position de pédale (26) et le deuxième capteur de position de pédale (28) étant disposés sur une platine (52) commune.

10. Pédale d'accélérateur active (12) selon l'une des revendications précédentes, le premier capteur de position de pédale (26) et/ou le deuxième capteur de position de pédale (28) étant configurés pour délivrer un signal de tension qui présente une dépendance linéaire à la position du levier de pédale (14).

11. Véhicule (10) équipé d'une pédale d'accélérateur active (12) selon l'une des revendications 1 à 10.
